# EUROPÄISCHE PATENTSCHRIFT

(11) **EP 0 861 754 B1**
(45) Veröffentlichungstag und Bekanntmachung des Hinweises auf die Patenterteilung: **07.11.2001**
(21) Anmeldenummer: 97121712.0
(22) Anmeldetag: 10.12.1997
(51) Int. Cl.: B60Q 1/30

(54) **Signalleuchte für ein Fahrzeug**
Signal light for vehicle
Feu de signalisation pour véhicule

(30) Priorität: 06.02.1997 DE 19704471; 08.04.1997 DE 19714367
(43) Veröffentlichungstag der Anmeldung: 02.09.1998
(73) Patentinhaber: VALEO Beleuchtung Deutschland GmbH, 74321 Bietigheim-Bissingen (DE)
(72) Erfinder: Feger, Rolf, 74321 Bietigheim-Bissingen (DE); Lendle, Reiner, 74855 Haamersheim (DE)
(74) Vertreter: Dreiss, Fuhlendorf, Steimle & Becker

(56) Entgegenhaltungen:
- DE-A- 4 002 520
- FR-A- 2 663 274
- US-A- 4 724 515
- PATENT ABSTRACTS OF JAPAN vol. 013, no. 257 (M-837), 14.Juni 1989 & JP 01 060448 A (KOITO MFG CO LTD), 7.März 1989,

## Beschreibung

Die Erfindung bezieht sich auf eine Signalleuchte für ein Fahrzeug mit den Merkmalen des Oberbegriffs des Anspruchs 1.

Eine derartige Signalleuchte ist beispielsweise aus der DE 195 21 118 A1 bekannt. Hierbei handelt es sich um eine Fahrzeugleuchte zur Anordnung an einer Heckscheibe eines Fahrzeugs. Diese Fahrzeugleuchte weist ein Gehäuse mit einer Kammer und einer Lichtaustrittsöffnung auf, welche durch eine Lichtscheibe verschlossen ist. Die Lichtscheibe wirkt als Lichtfilter und gibt dem abgegebenen Licht die erforderliche Signalfarbe, gleichzeitig ist die Lichtscheibe mit optischen Elementen zur Streuung des hindurchtretenden Lichtes ausgestattet. Der die Lichtaustrittsöffnung umgebende Rand des Gehäuses ist flanschartig ausgebildet und dient unter Verwendung eines doppelseitigen Klebebandes unmittelbar zur Befestigung des Gehäuses bzw. der gesamten Leuchte an der Innenseite der Heckscheibe des Fahrzeuges. Das Gehäuse der Leuchte besitzt weiterhin eine seitlich angeordnete Montageöffnung. Ein Leuchteneinsatz weist einen Basisteil und eine einstückig mit dem Basisteil gefertigte Haltevorrichtung für eine als Glühlampe ausgebildete Lichtquelle sowie eine nachträglich am Basisteil befestigte Optikscheibe auf, die im Strahlengang der Glühlampe angeordnet ist. Der Leuchteneinsatz ist durch die seitliche Montageöffnung hindurch in die Kammer des Leuchtengehäuses eingebracht, und der Basisteil des Leuchteneinsatzes ist die Montageöffnung überdeckend in der Art eines Bajonettverschlusses an dem Gehäuse gehalten.

Nachteilig an dieser bekannten Fahrzeugleuchte ist, daß die zunächst als separates Bauteil gefertigte Optikscheibe nachträglich an dem Basisteil des Leuchteneinsatzes befestigt werden muß. Dieses erfordert einerseits einen speziellen Montageaufwand, andererseits ist eine exakte Justierung der Optikscheibe hinsichtlich der Lage des Glühfadens der Glühlampe sowie der an der Lichtscheibe vorgesehenen wirksamen optischen Mittel zur Lichtverteilung erforderlich. Insbesondere dann, wenn die Abmessungen einer derartigen Fahrzeugleuchte und der in ihr verwendeten Lichtquelle sehr klein gehalten werden sollen, ist eine besonders exakte und damit aufwendige Justage der Optikscheibe erforderlich.

Aufgabe der Erfindung ist es, den Montageaufwand für eine Signalleuchte der eingangs beschriebenen Art, insbesondere den Aufwand für die exakte optische Justierung eines zu dem Leuchteneinsatz gehörenden optischen Mittels, zu verringern.

Erfindungsgemäß wird die Aufgabe durch eine Signalleuchte mit den Merkmalen des Anspruchs 1 gelöst. Dementsprechend ist wenigstens ein optisches Mittel der Signalleuchte, welches dazu dient, von der Lichtquelle abgegebenes Licht entsprechend vorgegebener oder vorgeschriebener Parameter für die Farbe oder die Richtung des Lichtsignals an der Austrittsöffnung des Gehäuses der Signalleuchte austreten zu lassen, einstückig mit dem Basisteil des Leuchteneinsatzes gefertigt. Dieses ist vorteilhaft einfach dadurch möglich, daß der Basisteil einschließlich das betreffende optische Mittel als ein einziges Bauteil durch Spritzgießen hergestellt wird. Hierbei muß nur werkzeugseitig einmalig ein Aufwand betrieben werden, um eine ständig reproduzierbare, exakt justierte Ausrichtung des betreffenden optischen Mittels am Basisteil zu erreichen. Mit geringem Montageaufwand ist somit ein Leuchteneinsatz bzw. eine Signalleuchte herstellbar, die sich durch besondere optische Präzision auszeichnet.

Vorteilhafte Weiterbildungen der Erfindung ergeben sich aus den Unteransprüchen. Eine Weiterbildung gemäß Anspruch 2 sieht vor, daß die Signalleuchte eine hinter der Heckscheibe eines Fahrzeuges angebrachte Signalleuchte, insbesondere eine zusätzliche Bremsleuchte, ist. Für derartige Signallleuchten ist eine erfindungsgemäße Ausbildung von besonderem Vorteil, da diese Leuchten mit möglichst kleinen Abmessungen ausgeführt sein sollen, um die Sicht durch die Heckscheibe des Fahrzeuges nicht zu beeinträchtigen.

Eine Weiterbildung der Erfindung gemäß Anspruch 3 sieht vor, daß die Signalleuchte im unteren Bereich der Heckscheibe, und dabei insbesondere im Bereich der Hutablage, des Fahrzeuges angeordnet und über ein geeignetes Haltemittel an der Hutablage oder an einem Teil des Fahrzeugchassis befestigt ist. Signalleuchten dieser Bauart werden in möglichst flacher Bauform erstellt, so daß die Verwendung einer möglichst kleinen Lichtquelle erforderlich wird. In derartigen Fällen wird man, um die entsprechende Leuchtkraft zu gewährleisten, mehrere kleine bzw. kleinste Glühlampen oder auch Leuchtdioden an dem Leuchteneinsatz vorsehen. Im Falle derartig kleiner, punktartiger Lichtquellen ist eine besonders präzise optische Ausrichtung der zusammenwirkenden optischen Mittel erforderlich. Bereits bei sehr kleinen Abweichungen in der Justierung der optischen Mittel zueinander würden erhebliche Abweichungen gegenüber dem beabsichtigten Strahlengang entstehen, deren Folge eine erhebliche Qualitätsminderung der Signalleuchte wäre.

Im Zusammenhang mit einer Signalleuchte gemäß Anspruch 3 wird eine Weiterbildung der Erfindung gemäß Anspruch 4 empfohlen, welche vorsieht, daß sich die Montageöffnung der Signalleuchte an der Unterseite des Gehäuses bzw. der Kammer befindet. Vorteilhaft ist hierbei, daß die Montageöffnung im Normalfall nicht sichtbar ist.

Eine andere Weiterbildung der Erfindung gemäß Anspruch 5 sieht vor, daß die Signalleuchte im oberen Bereich der Heckscheibe des Fahrzeuges angeordnet ist. In diesem Zusammenhang ergibt sich auch hier durch eine vorteilhafte Weiterbildung gemäß Anspruch , daß die Montageöffnung der Signallleuchte im Normalfall nicht sichtbar ist.

Die einstückige Fertigung eines optischen Mittels mit dem Basisteil des Leuchteneinsatzes kann die Verwendung von lichtdurchlässigem Material auch für den Basisteil des Leuchteneinsatzes mit sich bringen. In diesem Fall könnte ein Teil des von der Lichtquelle abgegebenen Lichtes durch den Basisteil hindurch aus der Kammer der Signalleuchte austreten. Um ohne zusätzlichen technischen Aufwand eine Störung des Fahrzeugführers bzw. von Fahrzeuginsassen zu vermeiden, wird eine Weiterbildung der Erfindung gemäß Anspruch 7 empfohlen. Hiernach wird durch das Gehäuse der Signallleuchte, insbesondere durch einen Rand des Gehäuses, der Bereich der Montageöffnung des Gehäuses lichtdicht gegenüber dem Fahrgastraum des Fahrzeuges abgeschirmt. Je nach Ausgestaltung der Signalleuchte erfolgt dieses insbesondere dadurch, daß ein Rand des Gehäuses möglichst lichtdicht an der Hutablage oder am Fahrzeugdach bzw. am Fahrzeughimmel bzw. an einer im Fahrzeug angebrachten Blende bzw. Verkleidung und/oder an anderen, im Bereich der Signalleuchte vorhandenen Teilen des Fahrzeuges anliegt.

Als vorteilhaft wird weiterhin eine Weiterbildung der Erfindung gemäß Anspruch 8 empfohlen, wonach ein Haltemittel für die Befestigung der Signalleuchte am Fahrzeug einstückig mit dem Basisteil des Leuchteneinsatzes gefertigt ist. In diesem Fall übernimmt der Basisteil eine tragende Funktion für die Signalleuchte. Über das einstückig mit dem Basisteil gefertigte Haltemittel wird der gesamte Leuchteneinsatz am Fahrzeug, d.h. an der Hutablage oder an einem anderen Teil des Fahrzeuges, befestigt, und das Gehäuse der Signalleuchte ist dann im wesentlichen durch den Leuchteneinsatz bzw. den Basisteil am Fahrzeug gehalten. Durch diese Maßnahme ist gleichzeitig eine vorbestimmte Ausrichtung des Leuchteneinsatzes hinsichtlich der Geometrie des Fahrzeuges vorgegeben. Eine spezielle Justierung der Signalleuchte bzw. des Leuchteneinsatzes in bezug auf die Fahrzeuggeometrie erübrigt sich somit.

Je nach der Art der Ausführung der Signalleuchte kann der Fachmann weiterhin die für die jeweiligen Bedingungen vorteilhafteste Weiterbildung der Erfindung auswählen. Eine Weiterbildung der Erfindung gemäß Anspruch 9 ist darauf gerichtet, daß ein der Lichtquelle zugeordneter Reflektor als ein einstückig mit dem Basisteil des Leuchteneinsatzes gefertigtes optisches Mittel ausgebildet ist. In diesem Fall ist eine exakte Zuordnung eines Reflektors zu der ebenfalls zu dem Leuchteneinsatz gehörenden Lichtquelle gewährleistet.

Bei einer Weiterbildung gemäß Anspruch 10 ist vorgesehen, daß das einstückig mit dem Basisteil des Leuchteneinsatzes gefertigte optische Mittel eine im Strahlengang der Signallleuchte angeordnete Optikscheibe ist.

Eine Weiterbildung der Erfindung gemäß Anspruch 11 sieht demgegenüber vor, daß eine im Strahlengang der Signalleuchte angeordnete Lichtscheibe als einstückig mit dem Basisteil des Leuchteneinsatzes gefertigtes optisches Mittel ausgebildet ist.

Anhand einer Zeichnung werden Ausführungsbeispiele der Erfindung nachfolgend näher beschrieben. Es zeigen:
- Fig. 1: im Vertikalschnitt ein erstes Ausführungsbeispiel einer hinter der Heckscheibe eines Fahrzeuges angebrachten Signalleuchte,
- Fig. 2: im Vertikalschnitt ein zweites Ausführungsbeispiel einer hinter der Heckscheibe eines Fahrzeuges angebrachten Signalleuchte und
- Fig. 3: im Vertikalschnitt ein drittes Ausführungsbeispiel einer hinter der Heckscheibe eines Fahrzeuges angebrachten Signalleuchte.

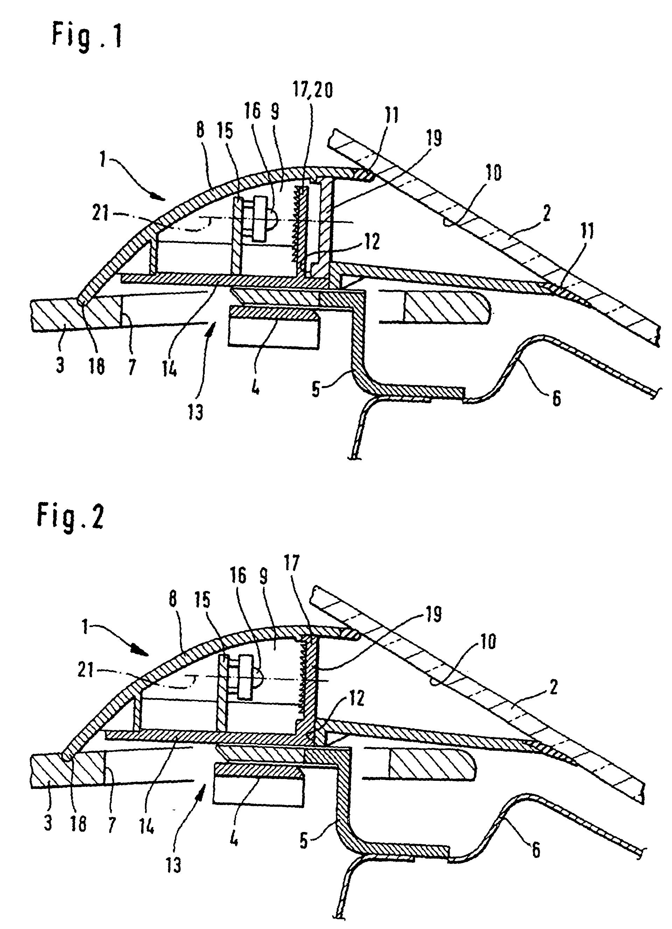

Bei den in den Figuren 1 bis 3 dargestellten Ausführungsbeispielen ist die Signalleuchte 1 jeweils eine hochgesetzte dritte Bremsleuchte. Diese Signalleuchte ist unmittelbar hinter der Heckscheibe 2 des Fahrzeuges und dabei im Bereich der Hutablage 3 angeordnet. Zur Befestigung der Signalleuchte 1 am Fahrzeug dient dabei ein zu der Signalleuchte 1 gehörendes Haltemittel 4, welches, vorzugsweise in der Art einer Rastverbindung, an einem Trägerteil 5 arretiert ist, welches wiederum an einem Teil des Fahrzeugchassis 6 befestigt ist. Die Signalleuchte 1 ist dabei im wesentlichen mit ihrer Unterseite auf die Hutablage 3 aufgesetzt, wobei das Haltemittel 4 und ein Abschnitt des Trägerteiles 5 im Bereich eines in der Hutablage 3 befindlichen Durchbruches 7 angeordnet sind. Zu der Signaleuchte 1 gehört jeweils ein Gehäuse 8, in dessen Innerem sich die Kammer 9 der Signallleuchte 1 befindet. Eine Lichtaustrittsöffnung 10 der Signalleuchte 1 befindet sich unmittelbar an der Innenseite der Heckscheibe 2 und wird von den Rändern 11 des Gehäuses 8 gebildet, welche unter Verwendung elastischen Materials lichtdicht an die Innenseite der Heckscheibe 2 angelegt sind.

Eine Montageöffnung 12 ist an der Unterseite des Gehäuses 8 vorgesehen. In diese Montageöffnung 12 ist ein Leuchteneinsatz 13 eingesetzt, zu dem ein Basisteil 14, eine über ein Trägerelement 15 an dem Basisteil 14 befestigte Lichtquelle 16 sowie wenigstens ein optisches Mittel 17 gehören. Der Leuchteneinsatz 13 ist dabei so montiert, daß der Basisteil 14 die Montageöffnung 12 überdeckt bzw. verschließt und die übrigen Teile des Leuchteneinsatzes 13, ausgenommen das Haltemittel 4, im wesentlichen innerhalb der Kammer 9 des Gehauses 8 angeordnet sind. Das Haltemittel 4 zur Befestigung der Signalleuchte 1 an einem Teil des Fahrzeugchassis 6 zeichnet sich dadurch aus, daß es einstückig mit dem Basisteil 14 des Leuchteneinsatzes 13 gefertigt ist. Um die Signalleuchte am Fahrzeug anzubringen, wird zunächst das Trägerteil 5 am Fahrzeug befestigt. Dann wird die komplett zusammengebaute Signalleuchte 1 mit dem Trägerteil 5 verbunden indem die Signalleuchte 1 mit dem Haltemittel 4 auf das Trägerteil 5 aufgeschoben und, vorzugsweise durch Verrasten an diesem arretiert wird.

Aus den Fig. 1 bis 3 ist noch ersichtlich, daß der untere Rand 18 des Gehäuses 8, der in einem gewissen Abstand die Montageöffnung 12 umgibt, an der Hutablage 3 möglichst lichtdicht anliegt und somit den Bereich der Montageöffnung 12 der Signalleuchte 1 gegenüber dem Fahrgastraum lichtdicht abschirmt. Letzteres ist insbesondere dann von Bedeutung, wenn der Basisteil 14 gemeinsam mit dem optischen Mittel 17 aus lichtdurchlässigem Material gefertigt ist. Letztendlich wird noch auf die Lichtscheibe 19 verwiesen, die im Strahlengang der Lichtquelle 16 angeordnet ist. Bei Verwendung einer oder mehrerer Glühlampen als Lichtquelle 16 hat diese Lichtscheibe 19 die Aufgabe eines Lichtfilters, um dem von der Lichtquelle 16 kommenden Licht die erforderliche Signalfarbe zu verleihen. Zusätzlich kann die Lichtscheibe 19 mit optischen Mitteln ausgestattet sein, welche das durch die Lichtscheibe 19 hindurchtretende Licht in einer angestrebten Weise streuen. Da aber bei den drei Ausführungsbeispielen eine Anzahl bereits rotes Licht abgebender LED's als Lichtquelle 16 verwendet werden, wovon aufgrund der Schnittdarstellung in der Zeichnung jeweils nur eine sichtbar ist, ist die Lichtscheibe farblos bzw. farbneutral ausgeführt. Das Trägerelement 15 ist eine entsprechend bestückte Leiterplatte, die an dem Basisteil 14 befestigt ist.

Nachdem nunmehr die drei Ausführungsbeispiele gemäß den Fig. 1 bis 3 mit ihren gemeinsamen Merkmalen beschrieben worden sind, soll noch auf die Unterschiede eingegangen werden, welche verschiedenen Weiterbildungen der Erfindung entsprechen.

Bei dem in Fig. 1 gezeigten Ausführungsbeispiel ist das optische Mittel 17, welches einstückig mit dem Basisteil 14 des Leuchteneinsatzes 13 gefertigt ist, eine Optikscheibe 20. Diese Optikscheibe 20, die nebenbei auch eine Farbfilterfunktion erfüllen kann, hat die Aufgabe, das von der Lichtquelle 16 kommende Licht im wesentlichen parallel zu der optischen Achse 21 auszurichten und auf die im Strahlengang folgende Lichtscheibe 19 abzugeben. Für den Fall, daß die Lichtscheibe 19 nicht mit lichtstreuenden Optikelementen ausgestattet ist, übernimmt die Optikscheibe 20 eine Verteilung des die Signalleuchte 1 verlassenden Lichtes.

Der wesentliche Unterschied des Ausführungsbeispieles von Fig. 2 gegenüber dem Ausführungsbeispiel von Fig. 1 besteht darin, daß in diesem Fall auf eine spezielle Optikscheibe verzichtet wurde. Hier ist die Lichtscheibe 19 dasjenige optische Mittel 17, welches einstückig mit dem Basisteil 14 des Leuchteneinsatzes 13 gefertigt ist. An der Innenseite der Lichtscheibe 19 sind integrierte Optikelemente angedeutet, welche dazu bestimmt sind, das von der Lichtquelle 16 kommende Licht in entsprechender Verteilung durch die Lichtaustrittsöffnung 10 der Signalleuchte 1 abzugeben. In diesem Fall können auch weitere lichtstreuende Optikelemente an der Außenseite der Lichtscheibe 19 vorgesehen sein.

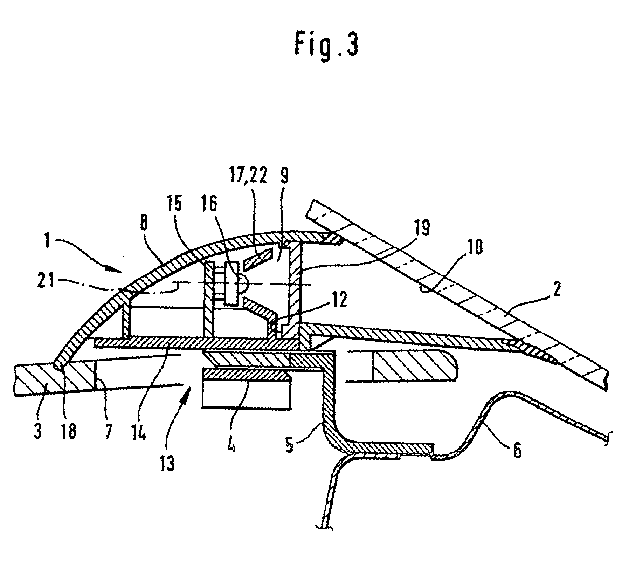

Bei dem Ausführungsbeispiel gemäß Fig. 3 ist ein Reflektor 22 dasjenige optische Mittel 17, welches einstückig mit dem Basisteil 14 des Leuchteneinsatzes 13 gefertigt ist. Da der Reflektor 22 eine erste Ausrichtung des von der Lichtquelle 16 kommenden Lichtes in bezug auf die optische Achse 21 vornimmt, ist bei diesem Ausführungsbeispiel auf eine spezielle Optikscheibe verzichtet worden. Die Lichtscheibe 19, welche wiederum der Lichtfilterung und/oder der Lichtstreuung dient, ist hier als separates Bauteil hergestellt und im Strahlengang am Gehäuse 8 befestigt. Da der Reflektor 22 nicht zum Durchtritt von Licht ausgebildet sein muß bzw. der Reflektor 22 ohnehin mit einer reflektierenden Beschichtung ausgestattet werden muß, kann hierbei lichtundurchlässiges Material für die Herstellung des Basisteiles 14 mit integriertem Reflektor 22 und Haltemittel 4 verwendet werden.

An dieser Stelle wird noch besonders darauf hingewiesen, daß eine zusätzliche Signalleuchte 1 auch in einer von den in den Figuren 1 bis 3 gezeigten Ausführungsbeispielen abweichenden Art hinter der Heckscheibe 2 eines Fahrzeuges angebracht werden kann. Beispielsweise kann die Signalleuchte entsprechend Anspruch 5 und 6 im oberen Bereich der Heckscheibe 2 angeordnet sein. Darüberhinaus ist auch die Verwendung von zwei Signalleuchten 1 möglich, wobei jeweils eine Signalleuchte 1 am rechten und eine am linken Rand der Heckscheibe 2 angeordnet ist. In diesem Fall wird sich die Montageöffnung 12 jeweils, an der von der Heckscheibe 2 abgewandten Seite des Gehäuses 8 der Signalleuchte 1 befinden, damit es im Normalfall nicht sichtbar ist. Die übrigen Merkmale der Erfindung bzw. deren Weiterbildungen sind in entsprechender Anpassung an die jeweiligen geometrischen Verhältnisse des Einbauortes ebenfalls sinnvoll anwendbar. Da diese Merkmale bereits ausführlich in den vorstehenden drei Ausführungsbeispielen beschrieben sind, kann hier auf eine wiederholende Beschreibung verzichtet werden.

### Bezugszeichenliste

- 1: Signalleuchte
- 2: Heckscheibe
- 3: Hutablage
- 4: Haltemittel
- 5: Trägerteil
- 6: Fahrzeugchassis
- 7: Durchbruch
- 8: Gehäuse
- 9: Kammer
- 10: Lichtaustrittsöffnung
- 11: Rand
- 12: Montageöffnung
- 13: Leuchteneinsatz
- 14: Basisteil
- 15: Trägerelement
- 16: Lichtquelle
- 17: Optisches Mittel
- 18: Rand
- 19: Lichtscheibe
- 20: Optikscheibe
- 21: Optische Achse
- 22: Reflektor

## Patentansprüche

1. Signalleuchte für ein Fahrzeug mit einem Gehäuse (8), welches eine Kammer (9) mit einer Lichtaustrittsöffnung (10) und mit einer Montageöffnung (12) aufweist, mit optischen Mitteln (17) und mit einem Leuchteneinsatz (13), welcher von einem Basisteil (14) und einem an dem Basisteil (14) befestigten optischen Mittel (17) sowie einem an dem Basisteil (14) befestigten Trägerelement (15), an dem eine Lichtquelle (16) gehalten ist, gebildet ist, wobei im zusammengebauten Zustand der Signallleuchte (1) der Basisteil (14) die Montageöffnung (12) überdeckend an dem Gehäuse (8) gehalten ist, und die übrigen Teile des Leuchteneinsatzes (13) durch die Montageöffnung (12) hindurch in die Kammer (9) eingebracht sind, und wobei die Signalleuchte (1) eine Lichtscheibe (19) aufweist, welche die Lichtaustrittsöffnung (10) des Gehäuses (8) verschließt bzw. welche innerhalb der Kammer (9) im Strahlengang der Lichtquelle (16) angeordnet ist, **dadurch gekennzeichnet, daß** wenigstens ein optisches Mittel (17) der Signalleuchte (1) einstückig mit dem Basisteil (14) des Leuchteneinsatzes (13) gefertigt ist.

2. Signalleuchte nach Anspruch 1, **dadurch gekennzeichnet, daß** die Signalleuchte (1) eine hinter der Heckscheibe (2) eines Fahrzeuges angebrachte Signalleuchte (1) ist, insbesondere eine zusätzliche Bremsleuchte.

3. Signalleuchte nach Anspruch 2, **dadurch gekennzeichnet, daß** die Signalleuchte (1) im unteren Bereich der Heckscheibe (2), und dabei insbesondere im Bereich der Hutablage (3), des Fahrzeuges angeordnet und über ein geeignetes Haltemittel (4) an der Hutablage (3) oder an einem Teil des Fahrzeugchassis (6) oder an der Heckscheibe (2) befestigt ist.

4. Signalleuchte nach Anspruch 3, **dadurch gekennzeichnet, daß** sich die Montageöffnung (12) der Signalleuchte (1) an der Unterseite des Gehäuses (8) bzw. der Kammer (9) befindet.

5. Signalleuchte nach Anspruch 2, **dadurch gekennzeichnet, daß** die Signalleuchte (1) im oberen Bereich der Heckscheibe (2) des Fahrzeuges angeordnet ist.

6. Signalleuchte nach Anspruch 2, **dadurch gekennzeichnet, daß** sich die Montageöffnung (12) der Signalleuchte (1) an der Oberseite des Gehäuses (8) bzw. der Kammer (9) befindet.

7. Signalleuchte nach einem der Anspruch 2 bis 6, **dadurch gekennzeichnet, daß** das Gehäuse (8), insbesondere ein Rand (18) des Gehäuses (8), den Bereich der Montageöffnung (12) möglichst lichtdicht gegenüber dem Fahrgastraum des Fahrzeuges abschirmt, insbesondere indem der Rand (18) des Gehäuses (8) möglichst lichtdicht an der Hubablage (3) oder am Fahrzeugdach bzw. am Fahrzeughimmel bzw. an einer im Fahrzeug angebrachten Blende bzw. Verkleidung und/oder an anderen, im Bereich der Signallleuchte (1) vorhandenen Teilen des Fahrzeuges anliegt.

8. Signalleuchte nach einem der vorhergehenden Ansprüche, **dadurch gekennzeichnet, daß** ein Haltemittel (4) für die Befestigung der Signalleuchte (1) am Fahrzeug einstückig mit dem Basisteil (14) des Leuchteneinsatzes (13) gefertigt ist.

9. Signalleuchte nach einem der vorhergehenden Ansprüche, **dadurch gekennzeichnet, daß** ein der Lichtquelle (16) zugeordneter Reflektor (22) ein einstückig mit dem Basisteil (14) des Leuchteneinsatzes (13) gefertigtes optisches Mittel (17) ist.

10. Signalleuchte nach einem der vorhergehenden Ansprüche, **dadurch gekennzeichnet, daß** eine im Strahlengang der Signalleuchte (1) angeordnete Optikscheibe (20) ein einstückig mit dem Basisteil (14) des Leuchteneinsatzes (13) gefertigtes optisches Mittel (17) ist.

11. Signalleuchte nach einem der vorhergehenden Ansprüche, **dadurch gekennzeichnet, daß** eine im Strahlengang der Signalleuchte (1) angeordnete Lichtscheibe (19) ein einstückig mit dem Basisteil (14) des Leuchteneinsatzes (13) gefertigtes optisches Mittel (17) ist.

## Claims

1. Signal light for a vehicle with a housing (8) which has a chamber (9) with a light aperture (10) and with a fitting aperture (12), with optical means (17) and with a light insert (13) which is formed by a base part (14) and an optical means (17) fastened to the base part (14) and a carrier element fastened to the base part (14), on which carrier element (15) a light source (16) is held, wherein in the assembled state of the signal light (1), the base part (14) is held, covering the fitting aperture (12), on the housing (8) and the remaining parts of the light insert (13) are inserted through the fitting aperture (12) into the chamber (9) and wherein the signal light (1) has a light disc (19) which closes the light aperture (10) of the housing (8) and which is arranged inside the chamber (9) in the beam path of the light source (16), **characterised in that** at least one optical means (17) of the signal light (1) is manufactured integrally with the base part (14) of the light insert (13).

2. Signal light according to claim 1, **characterised in that** the signal light (1) is a signal light (1) attached behind the rear window (2) of a vehicle, in particular an additional brake light.

3. Signal light according to claim 2, **characterised in that** the signal light (1) is arranged in the lower region of the rear window (2), and, in particular thereby, in the region of the parcel shelf (3), of the vehicle and is fastened via a suitable holding means (4) to the parcel shelf (3) or to a part of the vehicle chassis (6) or to the rear window (2).

4. Signal light according to claim 3, **characterised in that** the fitting aperture (12) of the signal light (1) is located on the bottom of the housing (8) or the chamber (9).

5. Signal light according to claim 2, **characterised in that** the signal light (1) is arranged in the upper region of the rear window (2) of the vehicle.

6. Signal light according to claim 2, **characterised in that** the fitting aperture (12) of the signal light (1) is located on the top of the housing (8) or the chamber (9).

7. Signal light according to any one of claims 2 to 6, **characterised in that** the housing (8), in particular an edge (18) of the housing (8), screens the region of the fitting aperture (12) in as light-proof a manner as possible from the passenger space of the vehicle, in particular **in that** the edge (18) of the housing (8) rests in as light-proof a manner as possible on the parcel shelf (3) or on the vehicle roof or the vehicle dome lining or on a visor attached in the vehicle or a trim and/or on other parts of the vehicle present in the region of the signal light (1).

8. Signal light according to any one of the preceding claims, **characterised in that** a holding means (4) for fastening the signal light (1) to the vehicle is manufactured integrally with the base part (14) of the light insert (13).

9. Signal light according to any one of the preceding claims, **characterised in that** a reflector (22) associated with the light source (16) is an optical means (17) manufactured integrally with the base part (14) of the light insert (13).

10. Signal light according to any one of the preceding claims, **characterised in that** an optical disc (20) arranged in the beam path of the signal light (1) is an optical means (17) manufactured integrally with the base part (14) of the light insert (13).

11. Signal light according to any one of the preceding claims, **characterised in that** a light disc (19) arranged in the beam path of the signal light (1) is an optical means (17) manufactured integrally with the base part (14) of the light insert (13).

## Revendications

1. Lampe de signalisation pour un véhicule, comportant un boîtier (8) qui comprend une chambre (9) pourvue d'une ouverture de sortie de lumièrè (10) et d'une ouverture de montage (12), des moyens optiques (17), et un insert de lampe (13) formé par une pièce de base (14) et des moyens optiques (17) fixés sur la pièce de base (14) ainsi que par un élément de support (15) fixé sur la pièce de base (14) et sur lequel est maintenu une source de lumière (16), à l'état assemblé de la lampe de signalisation (1), la pièce de base (14) étant maintenue sur le boîtier (8) en recouvrant l'ouverture de montage (12), et les autres pièces de l'insert de lampe (13) étant introduites dans la chambre (9) à travers l'ouverture de montage (12), et la lampe de signalisation (1) comprenant un disque de lumière (19) qui ferme l'ouverture de sortie de lumière (10) du boîtier (8) ou qui est agencé à l'intérieur de la chambre (9) dans la marche des rayons de la source de lumière (16), **caractérisée en ce qu'**au moins un moyen optique (17) de la lampe de signalisation (1) est fabriqué d'une seule pièce avec la pièce de base (14) de l'insert de lampe (13).

2. Lampe de signalisation selon la revendication 1, **caractérisée en ce que** la lampe de signalisation (1) est une lampe de signalisation (1) disposée derrière la lunette arrière (2) d'un véhicule, notamment un feu d'arrêt supplémentaire.

3. Lampe de signalisation selon la revendication 2, **caractérisée en ce que** la lampe de signalisation (1) est disposée dans la zone inférieure de la lunette arrière (2) du véhicule, et notamment dans la zone de la plage arrière (3) et est fixée par l'intermédiaire d'un moyen de maintien (4) adapté sur la plage arrière (3) ou sur une partie du châssis de véhicule (6) ou sur la lunette arrière (2).

4. Lampe de signalisation selon la revendication 3, **caractérisée en ce que** l'ouverture de montage (12) de la lampe de signalisation (1) se trouve sur le côté inférieur du boîtier (8) ou de la chambre (9).

5. Lampe de signalisation selon la revendication 2, **caractérisée en ce que** la lampe de signalisation (1) est disposée dans la zone supérieure de la lunette arrière (2) du véhicule.

6. Lampe de signalisation selon la revendication 2, **caractérisée en ce que** l'ouverture de montage (12) de la lampe de signalisation (1) se trouve sur le côté supérieur du boîtier (8) ou de la chambre (9).

7. Lampe de signalisation selon l'une quelconque des revendications 2 à 6, **caractérisée en ce que** le boîtier (8), notamment un bord (18) du boîtier (8), protège la zone de l'ouverture de montage (12) le plus possible contre la lumière par rapport à l'intérieur du véhicule, notamment **en ce que** le bord (18) du boîtier (8) s'appuie, le plus possible, de façon étanche à la lumière sur la plage arrière (3) ou sur le toit du véhicule ou sur l'habillage de plafond du véhicule ou sur un panneau ou une garniture disposée dans le véhicule, et / ou sur d'autres pièces du véhicule présentes dans la zone de la lampe de signalisation (1).

8. Lampe de signalisation selon l'une quelconque des revendications précédentes, **caractérisée en ce qu'**un moyen de maintien (4) pour la fixation de la lampe de signalisation (1) sur le véhicule est formé d'une seule pièce avec la pièce de base (14) de l'insert de lampe (13)

9. Lampe de signalisation selon l'une quelconque des revendications précédentes, **caractérisée en ce qu'**un réflecteur (22) associé à la source de lumière (16) est un moyen optique (17) fabriqué d'une seule pièce avec la pièce de base (14) de l'insert de lampe (13).

10. Lampe de signalisation selon l'une quelconque des revendications précédentes, **caractérisée en ce qu'**un disque optique (20) disposé dans la marche des rayons de la lampe de signalisation (1) est un moyen optique (17) fabriqué d'une seule pièce avec la pièce de base (14) de l'insert de lampe (13).

11. Lampe de signalisation selon l'une quelconque des revendications précédentes, **caractérisée en ce qu'**un disque de lumière (19) disposé dans la marche des rayons de la lampe de signalisation (1) est un moyen optique (17) fabriqué d'une seule pièce avec la pièce de base (14) de l'insert de lampe (13).
